# EUROPÄISCHE PATENTSCHRIFT

(11) **EP 2 153 262 B1**
(45) Veröffentlichungstag und Bekanntmachung des Hinweises auf die Patenterteilung: **06.04.2011**
(21) Anmeldenummer: 08785162.2
(22) Anmeldetag: 28.07.2008
(51) Int. Cl.: G02B 7/16, G02B 21/06, G02B 21/24

(54) **DURCHLICHTMIKROSKOP**
TRANSMITTED LIGHT MICROSCOPE
MICROSCOPE À LUMIÈRE TRANSMISE

(30) Priorität: 24.09.2007 DE 102007045556
(43) Veröffentlichungstag der Anmeldung: 17.02.2010
(73) Patentinhaber: Carl Zeiss MicroImaging GmbH, 07745 Jena (DE)
(72) Erfinder: HERMANN, Andreas, 37130 Gleichen (DE); KRAMER, Matthias, 37077 Göttingen (DE); SONDERMANN, Mario, 07749 Jena (DE)
(74) Vertreter: Geyer, Fehners & Partner
(86) Internationale Anmeldenummer: PCT/EP2008/006213
(87) Internationale Veröffentlichungsnummer: WO 2009/039912

(56) Entgegenhaltungen:
- EP-A- 1 772 764
- JP-A- 2006 189 616

## Beschreibung

Die vorliegende Erfindung betrifft ein Durchlichtmikroskop gemäß dem Oberbegriff des Anspruches 1 mit einem Stativfuß, einem oberhalb des Stativfußes angeordneten Objekttisch, einer oberhalb des Objekttisches angeordneten Beobachtungsoptik, einem zumindest teilweise innerhalb des Stativfußes angeordneten Beleuchtuhgsmodul, das innerhalb des Stativfußes ein Umlenkelement aufweist und dessen Beleuchtungsstrahlengang im Stativfuß horizontal bis zum Umlenkelement verläuft und von diesem vertikal nach oben zum Objekttisch hin umgelenkt wird, und mit einem um eine Drehachse drehbaren und mehrere Optikelemente tragenden Wechsler im Stativfuß, wobei durch Drehung des Wechslers um die Drehachse selektiv die einzelnen Optikelemente in den Beleuchtungsstrahlengang innerhalb des Stativfußes eingebracht werden können.

Die Wechsler solcher Durchlichtmikroskope sind häufig scheibenförmig ausgebildet, die in Umfangsrichtung der Scheibe mehrere Optikelemente (z.B. Filter) tragen, deren optische Achsen parallel zur Drehachse der Scheibe verlaufen. Die Wechsler sind im Stativfuß so angeordnet, daß die Drehachse horizontal verläuft, so daß der scheibenförmige Wechsler im Stativfuß aufrecht steht und daher relativ viel Platz in vertikaler Richtung benötigt.

Aus der JP 2002-031763 ist ein im wesentlichen scheibenförmiger Wechsler bekannt, der lösbar am Durchlichtmikroskop befestigbar ist. Dazu wird der im wesentlichen scheibenförmige Wechsler zwischen dem Stativfuß und dem Objekttisch angeordnet. Da der Wechsler außerhalb des Stativfußes angeordnet ist, können seine Abmessungen in waagrechter Richtung deutlich größer sein als die des Stativfußes.

Ein Durchlichtmikroskop mit dem Merkmalen des Oberbegriffs des Anspruches 1 ist aus der EP 1 772 764 A2 bekannt.

Die JP 2006-189616 A zeigt ein Auflichtmikroskop, bei dem im Beleuchtungsstrahlengang ein drehbarer Wechsler vorgesehen ist, mit dem selektiv eines von mehreren Optikelementen in dem Beleuchtungsstrahlengang eingebracht werden kann.

Ausgehend hiervon ist es Aufgabe der Erfindung, ein Durchlichtmikroskop der eingangs genannten Art derart weiterzubilden, daß der Wechsler mit den mehreren Optikelementen im Stativfuß so vorgesehen werden kann, daß eine möglichst große Anzahl von Optikelemente bei einem möglichst geringen Platzbedarf im Stativfuß bereitgestellt werden kann.

Erfindungsgemäß wird die Aufgabe bei einem Durchlichtmikroskop der eingangs genannten Art dadurch gelöst, daß der Wechsler so angeordnet ist, daß das Umlenkelement von den Optikelementen umgeben ist, und daß das mittels dem Wechsler in den Beleuchtungsstrahlengang eingebrachte Optikelement im horizontalen Abschnitt des Beleuchtungsstrahlenganges angeordnet ist.

Dies ist eine besonders kompakte und platzsparende Anordnung des Wechslers. Insbesondere können die Optikelemente das Umlenkelement vollständig oder teilweise umgeben.

Aufgrund der vertikalen Ausrichtung der Drehachse des Wechslers ist die Ausdehnung des Wechslers in horizontaler Richtung größer als in vertikaler Richtung. Dadurch kann der vorhandene Platz im Stativfuß optimal genutzt werden, da der Stativfuß in der Regel breiter als hoch ist.

Insbesondere kann der Wechsler jedes Optikelement so tragen, daß die optische Achse des Optikelements horizontal verläuft, wodurch die Optikelemente aufrecht stehen. Anders gesagt, die optische Achse jedes Optikelementes kann im wesentlichen senkrecht zur Drehachse des Wechslers verlaufen. Dies kann man z.B. dazu nutzen, daß unerwünschte Reflexe nicht nachteilig die Abbildungseigenschaften des Durchlichtmikroskops verschlechtern. Durch ein leichtes Schrägstellen (also nicht exakt senkrecht) der Optikelemente laufen die unerwünschten Reflexe z.B. aus dem Beleuchtungsstrahlengang heraus. Bevorzugt beträgt die Abweichung von der senkrechten Anordnung nur einige Grad, z.B. zwischen 0-10° oder zwischen 0 - 5°. Durch die aufrechte Anordnung der Optikelemente kann die Ausdehnung des Wechslers in horizontaler Richtung verringert werden, da die Dicke der optischen Elemente in der Regel sehr viel geringer ist als ihr Durchmesser bzw. ihre Ausdehnung in aufrechter Richtung.

Insbesondere können die Optikelemente ringförmig (z.B. kreisringförmig) um die Drehachse angeordnet sein. Dies ist eine besonders vorteilhafte Anordnung, um einen kompakten Wechsler bereitzustellen.

Ferner ist es möglich, daß die Optikelemente nur auf einem Abschnitt eines gedachten Ringes, der die Drehachse umgibt, und somit auf einem Ringsegment angeordnet sind. In diesem Fall umschließen die Optikelemente die Drehachse teilweise.

Die Optikelemente können entlang des Umfangs des Wechslers gleichmäßig angeordnet werden.

Insbesondere kann der Wechsler eine ungerade Anzahl von Optikelementen tragen.

Bei dem erfindungsgemäßen Durchlichtmikroskop kann zusätzlich zu dem Wechsler, der nachfolgend als erster Wechsler bezeichnet wird, ein zweiter Wechsler im Stativfuß angeordnet sein. Der zweite Wechsler weist bevorzugt den grundsätzlich gleichen Aufbau wie der erste Wechsler auf.

So kann der zweite Wechsler um eine vertikal verlaufende zweite Drehachse drehbar sein und mehrere zweite Optikelemente tragen, die die Optikelementen des ersten Wechsler umgeben. Es ist somit eine konzentrische Anordnung der Optikelemente mittels der beiden Wechsler möglich. Damit können die optischen Wirkungen der Optikelemente der beiden Wechsler miteinander kombiniert werden. Auch ist diese konzentrische Anordnung außerordentlich platzsparend, um die Anzahl der Optikelemente, die in den Beleuchtungsstrahlengang eingebracht werden können, deutlich zu erhöhen.

Insbesondere kann die Drehachse des zweiten Wechslers mit der Drehachse des ersten Wechslers zusammenfallen.

Der bzw. die Wechsler können manuell betätigt werden. Es ist jedoch auch möglich, einen bzw. mehrere entsprechende Motoren vorzusehen, um den bzw. die Wechsler motorbetrieben drehen zu können.

Der bzw. die Wechsler können jeweils eine Drehstellung aufweisen, in der keines der durch den Wechsler getragenen Optikelemente im Beleuchtungsstrahlengang eingebracht ist. In dieser Drehstellung kann ein wirkneutraler Durchgang des Lichtes des Beleuchtungsmoduls durch den Wechsler gewährleistet werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

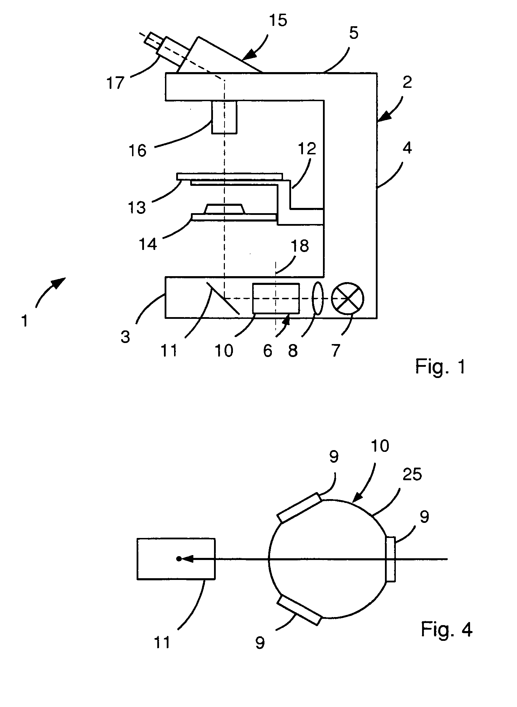

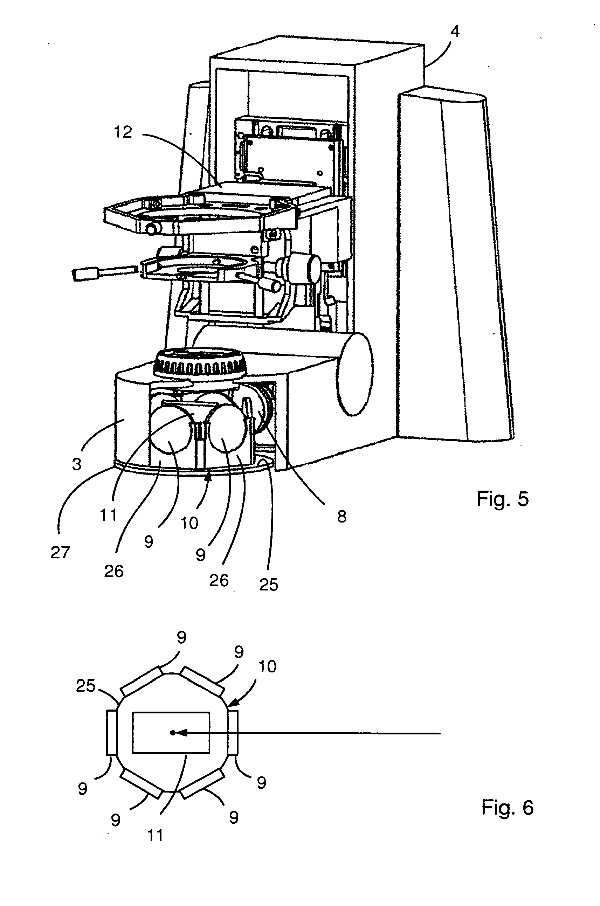

Nachfolgend wird die Erfindung beispielsweise anhand der beigefügten Zeichnungen, die auch erfindungswesentliche Merkmale offenbaren, noch näher erläutert, wobei in Verbindung mit Figuren 1 bis 4 zwei Durchlichtmikroskope beschrieben werden, die zwar keine erfindungsgemäße Durchlichtmikroskope sind, aber deren Beschreibung zum besseren Verständnis der nachfolgend in Verbindung mit Figuren 5 bis 8 beschriebenen Ausführungsformen des erfindungsgemäßen Durchlichtmikroskops dient. Es zeigen:
- Fig. 1: eines schematische Ansicht eines Durchlichtmikroskops;
- Fig. 2: eine perspektivische Teilansicht des unteren Teils des Durchlichtmikroskops von Fig. 1;
- Fig. 3: eine schematische Draufsicht zur Erläuterung der Anordnung der Optikelemente 9 des Wechslers 10 von Fig. 2;
- Fig. 4: eine schematische Draufsicht einer Abwandlung der Anordnung der Optikelemente 9 des Wechslers 10;
- Fig. 5: eine perspektivische Teilansicht einer ersten Ausführungsform des erfindungsgemäßen Durchlichtmikroskopes;
- Fig. 6: eine schematische Draufsicht zur Erläuterung der Anordnung der Optikelemente 9 des Wechslers 10 von Fig. 5;
- Fig. 7: eine perspektivische Teilansicht einer zweiten Ausführungsform des erfindungsgemäßen Durchlichtmikroskops; und
- Fig. 8: eine schematische Draufsicht zur Erläuterung der Anordnung der Optikelemente 9 und 21 der Wechsler 10, 20 von Fig. 7.

Bei den in Fig. 1 bis 3 dargestellten Ausführungsform umfaßt das Durchlichtmikroskop 1 ein Mikroskopgehäuse 2 mit einem Stativfuß 3, einem senkrechten Gehäuseabschnitt 4 sowie einen waagrechten Gehäuseabschnitt 5, so daß das Mikroskopgehäuse 2 in Seitenansicht im wesentlichen C-förmig ausgebildet ist.

Innerhalb des Stativfußes 3 und des unteren Teils des senkrechten Gehäuseabschnitts 4 ist ein Beleuchtungsmodul 6 angeordnet, das eine schematisch dargestellte Lichtquelle 7, eine Beleuchtungsoptik 8, einen nachfolgend im Detail noch näher beschriebenen, mehrere Optikelemente 9 tragenden Wechsler 10 sowie ein Umlenkelement 11 umfaßt.

Wie durch die in Fig. 1 dargestellte Strichlinie ersichtlich ist, verläuft der Beleuchtungsstrahlengang innerhalb des Stativfußes 3 von der Lichtquelle 7 bis zum Umlenkelement 11 in horizontaler Richtung und wird dann vom Umlenkelement um 90° in vertikaler Richtung nach oben umgelenkt.

Am senkrechten Gehäuseabschnitt 4 ist ein in vertikaler Richtung verschiebbarer Träger 12 angeordnet, der einerseits einen Objekttisch 13 und andererseits eine Kondensoroptik 14 trägt. Mittels dem Träger 12 kann der Objekttisch 13 und die Kondensoroptik 14 in vertikaler Richtung verschoben werden. Der Träger 12 weist typischerweise Mittel zum Verstellen des Abstandes zwischen Objekttisch 13 und Kondensoroptik 14 auf.

An dem waagrechten Gehäuseabschnitt 5 ist eine übliche Mikroskopbeobachtungsoptik 15 mit einem Objektiv 16 und einer Tubusoptik 17 angeordnet. Natürlich kann die Beobachtungsoptik 15 mehrere Objektive 16 aufweisen, die an einem drehbaren Objektivrevolver (nicht gezeigt) befestigt sind.

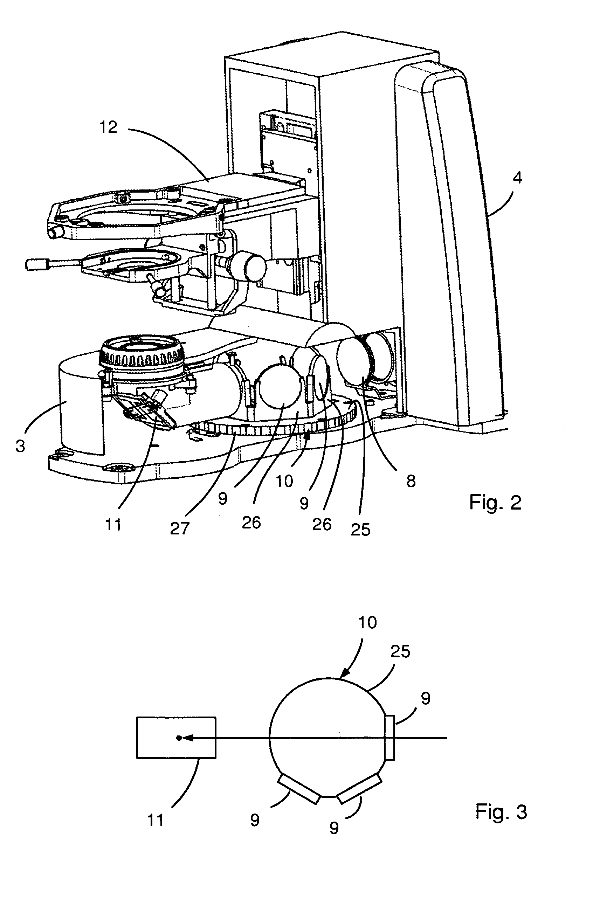

Bei der in Fig. 1 bis 3 gezeigten Ausführungsform weist der Wechsler 10 eine Grundplatte 25 mit sechs Haltern 26 auf, von denen drei als Optikelemente 9 Neutralgraufilter haltern. Die Filter 9 sind, in der Draufsicht von Fig. 3 gesehen, auf einem Kreisring angeordnet und in Umfangsrichtung um jeweils 60° voneinander beabstandet.

Der Wechsler 10 ist drehbar gelagert, wobei seine Drehachse 18 vertikal verläuft und somit senkrecht zum horizontal verlaufenden Abschnitt des Beleuchtungsstrahlengangs im Stativfuß 3. Die Filter 9 sind im Wechsler 10 so gehaltert, daß sie vertikal angeordnet sind bzw. aufrecht stehen. Somit erstrecken sich ihre optischen Achsen jeweils horizontal und damit senkrecht zur Drehachse 18. Der Wechsler 10 ist so im Stativfuß 3 angeordnet, daß ein Abschnitt des geriffelten Randes 27 der Grundplatte 25 durch eine seitliche Öffnung (nicht gezeigt) aus dem Stativfuß 3 nach außen vorsteht, so daß ein Benutzer des Mikroskops 1 die Grundplatte 25 um die Drehachse 18 drehen und damit den gewünschten Filter 9 in den Beleuchtungsstrahlengang im Stativfuß 3 einbringen kann. Durch die Umfangsrichtung um 60° versetzte Anordnung der Filter 9 ist sichergestellt, daß immer nur genau ein einziger Filter 9 im Beleuchtungsstrahlengang angeordnet ist. Natürlich kann der Wechsler 10 so ausgebildet sein, daß in einer Drehstellung keiner der Filter 9 im Beleuchtungsstrahlengang ist.

Da bei Mikroskopen der Stativfuß in der Regel breiter als hoch ist, können mittels dem Wechsler 10 mehr Optikelemente im Beleuchtungsstrahlengang vorgesehen werden im Vergleich zu dem Fall, bei dem ein Farbfilterrad in bekannter Weise mit waagrecht verlaufender Drehachse im horizontal verlaufenden Abschnitt des Beleuchtungsstrahlengangs im Stativfuß angeordnet ist.

Wie der Darstellung von Fig. 4 zu entnehmen ist, in der eine Abwandlung der Anordnung der Filter 9 auf der Grundplatte 25 gezeigt ist, können die Optikelemente 9 in Umfangsrichtung um 120° voneinander beabstandet angeordnet sein, so daß im Strahlengang immer höchstens genau ein Optikelement 9 angeordnet ist. Bei dem in Fig. 4 gezeigten Beispiel verläuft der Beleuchtungsstrahlengang durch eines der Optikelemente 9 und dann durch die Lücke zwischen den beiden anderen Optikelementen 9 hindurch.

Insbesondere kann der Wechsler eine ungerade Anzahl von Optikelementen umfassen, die gleichmäßig auf dem Umfang des Wechslers angeordnet sind, so daß zwischen jeweils zwei Optikelementen ein gleich großer Zwischenraum zum Durchlaß der Beleuchtungsstrahlung vorhanden ist.

In Fig. 5 und 6 ist eine erste Ausführungsform des erfindungsgemäßen Durchlichtmikroskops 1, die eine Abwandlung des Durchlichtmikroskops gemäß Fig. 1 bis 3 ist dargestellt, wobei gleiche Elemente mit gleichen Bezugszeichen bezeichnet sind und zu deren Beschreibung auf die obigen Ausführungen verwiesen wird.

Bei der Ausführungsform von Fig. 5 und 6 ist der Wechsler 10 so angeordnet, daß die Optikelemente 9 das Umlenkelement 11 umschließen. Dadurch verläuft der Beleuchtungsstrahlengang, in der Draufsicht von Fig. 6 gesehen, nur noch etwa durch den halben Wechsler 10, was zu dem Vorteil führt, daß die Optikelemente 9 auf dem Kreisring einander gegenüber liegen können. Somit kann der Wechsler bei der Ausführungsform von Fig. 5 und 6 sechs verschiedene Optikelemente 9 tragen und somit doppelt so viele wie die Wechsler 10 der Beispiele von Fig. 1 bis 4.

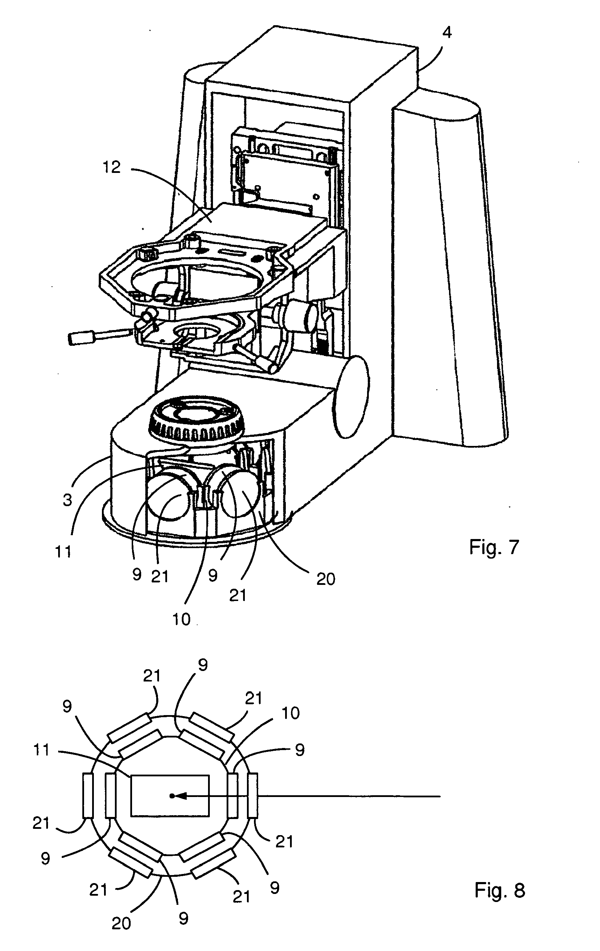

In den Fig. 7 und 8 ist eine Weiterbildung der Ausführungsform von Fig. 5 und 6 gezeigt, so daß im wesentlichen nur die Unterschiede beschrieben werden. Zusätzlich zu dem ersten Wechsler 10 ist ein zweiter Wechsler 20 vorgesehen, der grundsätzlich den gleichen Aufbau wie der erste Wechsler 10 aufweist und der wiederum sechs Optikelemente 21 aufrecht stehend trägt, wobei die Optikelemente 21, in der Draufsicht von Fig. 8 gesehen, in einem etwas größeren Kreisring als die Optikelemente 9 des ersten Wechslers 10 angeordnet sind. Die Drehachse des weiteren Wechslers 20 verläuft vertikal und fällt bevorzugt mit der Drehachse 18 des Wechslers 10 zusammen. Durch diese konzentrische Anordnung der Optikelemente 9 und 21 können bei der Ausführungsform von Fig. 7 und 8 nun doppelt so viele Optikelemente vorgesehen werden im Vergleich zu der Ausführungsform von Fig. 5 und 6, ohne daß der dazu notwendige Platzbedarf deutlich ansteigt.

Natürlich ist es bei den Ausführungsformen von Fig. 5 bis 8 möglich, daß die Wechsler 10 und 20 jeweils nur fünf Optikelemente 9, 21 tragen, so daß jeder Wechsler 10, 20 eine Drehstellung aufweist, bei der kein Optikelement 9, 21 im Beobachtungsstrahlengang angeordnet ist.

Bei den Optikelementen 9 und 21 kann es sich, wie bereits beschrieben, um Filter handeln. Insbesondere können die Filter als Neutralgraufilter, um eine farbneutrale Abschwächung des Lichtes der Lichtquelle 7 durchführen zu können, Farbfilter, Polarisatoren, Abschwächfilter, usw. ausgebildet sein. Es ist jedoch auch möglich, daß die Optikelemente 9, 21 optische Elemente zur Strahlformung sind, wie z.B. refraktive und/oder diffraktive Elemente.

Die beschriebenen Wechsler 10, 20 können jeweils manuell gedreht werden. Natürlich ist es möglich, einen Antrieb (z.B. Elektromotor) vorzusehen, mit dem der Wechsler motorgetrieben gedreht werden.

## Patentansprüche

1. Durchlichtmikroskop mit
einem Stativfuß (3),
einem oberhalb des Stativfußes (3) angeordneten Objekttisch (13),
einer oberhalb des Objekttisches angeordneten Beobachtungsoptik (15),
einem zumindest teilweise innerhalb des Stativfußes (3) angeordneten Beleuchtungsmodul (6), das innerhalb des Stativfußes (3) ein Umlenkelement (11) aufweist und dessen Beleuchtungsstrahlengang im Stativfuß (3) horizontal bis zum Umlenkelement (11) verläuft und von diesem vertikal nach oben zum Objekttisch (13) hin umgelenkt wird,
und mit einem um eine Drehachse (18) drehbaren und mehrere Optikelemente (9; 21) tragenden Wechsler (10; 20) im Stativfuß (3), wobei durch Drehung des Wechslers (10, 20) um die Drehachse (18) selektiv die einzelnen Optikelemente (9, 21) in den Beleuchtungsstrahlengang innerhalb des Stativfußes (3) eingebracht werden können,
wobei der Wechsler (10, 20) im Stativfuß (3) so angeordnet ist, daß die Drehachse (18) des Wechslers (10, 20) vertikal verläuf, **dadurch gekennzeichnet, daß** der Wechsler (10, 20) so angeordnet ist, daß das Umlenkelement (11) von den Optikelementen (9, 21) umgeben ist, und daß das mittels dem Wechsler (10, 20) in den Beleuchtungsstrahlengang eingebrachte Optikelement (9, 21) im horizontalen Abschnitt des Beleuchtungsstrahlengangs angeordnet ist.

2. Durchlichtmikroskop nach Anspruch 1, **dadurch gekennzeichnet, daß** der Wechsler (10, 20) jedes Optikelement (9, 21) so trägt, daß die optische Achse des Optikelements im wesentlichen horizontal verläuft.

3. Durchlichtmikroskop nach Anspruch 1 oder 2, **dadurch gekennzeichnet, daß** die optische Achse jedes Optikelementes (9, 21) im wesentlichen senkrecht zur Drehachse (18) verläuft.

4. Durchlichtmikroskop nach einem der obigen Ansprüche, **dadurch gekennzeichnet, daß** die Optikelemente (9, 21) ringförmig um die Drehachse (18) angeordnet sind.

5. Durchlichtmikroskop nach einem der obigen Ansprüche, **dadurch gekennzeichnet, daß** der Wechsler (10, 20) eine Drehstellung aufweist, bei der keines der Optikelemente (9, 21) im Beleuchtungsstrahlengang angeordnet ist.

6. Durchlichtmikroskop nach einem der obigen Ansprüche, **dadurch gekennzeichnet, daß** die Optikelemente (9, 21) so angeordnet sind, daß stets maximal ein Optikelement (9, 21) in den Beleuchtungsstrahlengang eingebracht werden kann.

7. Durchlichtmikroskop nach einem der obigen Ansprüche, **dadurch gekennzeichnet, daß** zusätzlich zum Wechsler (10), der nachfolgend als erster Wechsler bezeichnet wird, ein zweiter Wechsler (20) im Stativfuß (3) angeordnet ist, wobei der zweite Wechsler (20) um eine zweite Drehachse drehbar ist, die vertikal verläuft, und mehrere zweite Optikelemente (21) trägt, die die Optikelemente (9) des ersten Wechslers (10) umgeben.

8. Durchlichtmikroskop nach Anspruch 7, **dadurch gekennzeichnet, daß** die Drehachse des zweiten Wechslers (20) mit der Drehachse (18) des ersten Wechslers (10) zusammenfällt.

## Claims

1. Transmitted light microscope having a stand base (3), an object stage (13) arranged above the stand base (3), an observation lens (15) arranged above the object stage, an illumination module (6) which is arranged at least partially inside the stand base (3), having, inside the stand base (3) a deflection element (11) and the illumination beam path of which in the stand base (3) extends horizontally up to the deflection element (11) and is deflected by the latter vertically upwards in the direction of the object stage (13), and having a changer (10; 20) in the stand base (3), which changer can be rotated about a rotational axis (18) and carries a plurality of optical elements (9; 21), wherein the individual optical elements (9, 21) can be selectively inserted into the illumination beam path inside the stand base (3) by rotating the changer (10, 20) about the rotational axis (18), wherein the changer (10, 20) is arranged in the stand base (3) such that the rotational axis (18) of the changer (10, 20) extends vertically, **characterised in that** the changer (10, 20) is arranged such that the deflection element (11) is surrounded by the optical elements (9, 21) and that the optical element (9, 21) introduced into the illumination beam path by means of the changer (10, 20) is arranged in the horizontal section of said illumination beam path.

2. Transmitted light microscope according to claim 1, **characterised in that** the changer (10, 20) carries each optical element (9, 21) such that the optical axis of the optical element extends essentially horizontally.

3. Transmitted light microscope according to claim 1 or 2, **characterised in that** the optical axis of each optical element (9, 21) extends essentially perpendicular to the rotational axis (18).

4. Transmitted light microscope according to one of the above claims, **characterised in that** the optical elements (9, 21) are arranged about the rotational axis (18) in the form of a ring.

5. Transmitted light microscope according to one of the above claims, **characterised in that** the changer (10, 20) has a rotational position in which none of the optical elements (9, 21) is arranged in the illumination beam path.

6. Transmitted light microscope according to one of the above claims, **characterised in that** the optical elements (9, 21) are arranged such that a maximum of one optical element (9, 21) can always be introduced into the illumination beam path.

7. Transmitted light microscope according to one of the above claims, **characterised in that** in addition to the changer (10), which is subsequently referred to as the first changer, a second changer (20) is arranged in the stand base (3), wherein the second changer (20) can be rotated about a second rotational axis, which extends vertically, and carries a plurality of second optical elements (21) which surround the optical elements (9) of the first changer (10).

8. Transmitted light microscope according to claim 7, **characterised in that** the rotational axis of the second changer (20) coincides with the rotational axis (18) of the first changer (10).

## Revendications

1. Microscope à lumière transmise comprenant un pied (3),
une table porte-objet (13) disposé au-dessus du pied (3),
une optique d'observation (15) disposée au-dessus de la table porte-objet,
un module d'éclairage (6) disposé au moins partiellement à l'intérieur du pied (3),
qui présente un élément de déviation (11) à l'intérieur du pied (3) et dont la trajectoire du faisceau d'éclairage se trouve dans le pied (3) horizontalement jusqu'à l'élément de déviation (11) et est déviée à partir de celui-ci verticalement vers le haut en direction de la table porte-objet (13),
et un changeur (10; 20) pouvant tourner autour d'un axe de rotation (18) et portant plusieurs éléments d'optique (9; 21) dans le pied (3), les éléments d'optique individuels (9, 21) pouvant être introduits de façon sélective dans la trajectoire du faisceau d'éclairage à l'intérieur du pied (3) par la rotation du changeur (10, 20) autour de l'axe de rotation (18),
le changeur (10, 20) étant disposé dans le pied (3) de sorte que l'axe de rotation (18) du changeur (10, 20) est agencé verticalement, **caractérisé en ce que** le changeur (10, 20) est disposé de sorte que l'élément de déviation (11) est entouré par les éléments d'optique (9, 21), et que l'élément d'optique (9, 21), qui est introduit au moyen du changeur (10, 20) dans la trajectoire du faisceau d'éclairage, est disposé dans la partie horizontale de la trajectoire du faisceau d'éclairage.

2. Microscope à lumière transmise selon la revendication 1, **caractérisé en ce que** le changeur (10, 20) porte chaque élément d'optique (9, 21) de sorte que l'axe optique de l'élément d'optique est agencé sensiblement horizontalement.

3. Microscope à lumière transmise selon la revendication 1 ou 2, **caractérisé en ce que** l'axe optique de chaque élément d'optique (9, 21) est agencé sensiblement perpendiculairement à l'axe de rotation (18).

4. Microscope à lumière transmise selon l'une quelconque des revendications précédentes, **caractérisé en ce que** les éléments d'optique (9, 21) sont disposés en forme d'anneau autour de l'axe de rotation (18).

5. Microscope à lumière transmise selon l'une quelconque des revendications précédentes, **caractérisé en ce que** le changeur (10, 20) présente une position de rotation dans laquelle aucun des éléments d'optique (9, 21) est disposé dans la trajectoire du faisceau d'éclairage.

6. Microscope à lumière transmise selon l'une quelconque des revendications précédentes, **caractérisé en ce que** les éléments d'optique (9, 21) sont disposés de telle sorte que, toujours et au maximum, un élément d'optique (9, 21) peut être introduit dans la trajectoire du faisceau d'éclairage.

7. Microscope à lumière transmise selon l'une quelconque des revendications précédentes, **caractérisé en ce que**, en supplément du changeur (10), qui est désigné ci-dessous par premier changeur, un second changeur (20) est disposé dans le pied (3), le second changeur (20) pouvant tourner autour d'un second axe de rotation qui est agencé verticalement et porte plusieurs éléments d'optique (21), lesquels entourent les éléments d'optique (9) du premier changeur (10).

8. Microscope à lumière transmise selon la revendication 7, **caractérisé en ce que** l'axe de rotation du deuxième changeur (20) coïncide avec l'axe de rotation (18) du premier changeur (10).
